(19) **Europäisches Patentamt / European Patent Office / Office européen des brevets**

(11) **EP 1 142 040 B1**

(12) **EUROPÄISCHE PATENTSCHRIFT**

(45) Veröffentlichungstag und Bekanntmachung des Hinweises auf die Patenterteilung:
**07.05.2008   Patentblatt 2008/19**

(21) Anmeldenummer: **99966862.7**

(22) Anmeldetag: **14.12.1999**

(51) Int Cl.:
**H01L 41/09** (2006.01)

(86) Internationale Anmeldenummer:
**PCT/DE1999/003986**

(87) Internationale Veröffentlichungsnummer:
**WO 2000/036658 (22.06.2000 Gazette 2000/25)**

(54) **AKTOR ZUM AUSLENKEN EINES STELLGLIEDS UND KRAFTSTOFFEINSPRITZVENTIL MIT EINEM SOLCHEN AKTOR**

ACTUATOR FOR DISPLACING A FINAL CONTROL ELEMENT AND FUEL INJECTION VALVE WITH AN ACTUATOR OF THIS TYPE

ACTIONNEUR DESTINE A DEVIER UN ORGANE FINAL ET SOUPAPE D'INJECTION DE CARBURANT DOTEE D'UN TEL ACTIONNEUR

(84) Benannte Vertragsstaaten:
**DE FR**

(30) Priorität: **15.12.1998   DE 19857922**

(43) Veröffentlichungstag der Anmeldung:
**10.10.2001   Patentblatt 2001/41**

(73) Patentinhaber: **SIEMENS AKTIENGESELLSCHAFT 80333 München (DE)**

(72) Erfinder:
- **AUGUSTIN, Ulrich**
  **D-71394 Kernen (DE)**
- **FRANK, Wilhelm**
  **D-96049 Bamberg (DE)**
- **KLÜGL, Wendelin**
  **D-92358 Seubersdorf (DE)**
- **LEWENTZ, Günter**
  **D-93055 Regensburg (DE)**
- **FREUDENBERG, Helmut**
  **D-93080 Grossberg (DE)**
- **SCHMUTZLER, Gerd**
  **D-93138 Kareth (DE)**

(56) Entgegenhaltungen:
**EP-A- 0 143 128**

- **PATENT ABSTRACTS OF JAPAN vol. 012, no. 169 (M-699), 20. Mai 1988 (1988-05-20) & JP 62 283274 A (KOGANEI SEISAKUSHO:KK), 9. Dezember 1987 (1987-12-09)**

**Beschreibung**

Die Erfindung betrifft einen Aktor zum Auslenken eines Stellglieds gemäß dem Oberbegriff des Patentanspruchs 1 und ein Kraftstoffeinspritzventil mit einem solchen Aktor.

Aus US 4,101,076 ist ein Kraftstoffeinspritzventil bekannt, das einen piezoelektrischen Aktor aufweist, der über ein mechanisches Übertragungselement direkt eine Einspritznadel steuert. Das Übertragungselement weist zwei unterschiedlich lange Hebelarme auf, die im rechten Winkel zueinander angeordnet sind und in einem Auflagebereich miteinander verbunden sind. Der kürzere Hebelarm ist dem piezoelektrischen Aktor und der längere Hebelarm der Einspritznadel zugeordnet. Das Übertragungselement liegt im Auflagebereich am Gehäuse des Einspritzventils auf. Die Auslenkung des piezoelektrischen Aktors wird durch die unterschiedlichen Längen der zwei Hebelarme in eine größere Auslenkung der Einspritznadel umgesetzt.

Aus dem Artikel von Konrad Voigt "Piezoaktortorische Antriebe für den industriellen Einsatz" der Zeitschrift "Feinwerktechnik und Meßtechnik", Band 104, 1996, Heft ½, Seiten 68 - 72 sind verschiedene piezoelektrische Hebelübersetzer bekannt.

Aktoren zum Auslenken eines Stellglieds mit einem Kippbaren Übertragungselement sind auch in EP 0 143 128 und Pat.abstr. of J., 012 (169) (JP62 283 274) beschrieben worden.

Ein Doppelstapel-Kipphebel ist aus zwei aktiven, parallel zueinander angeordneten piezoelektrischen Aktoren angeordnet, deren eine Stirnseite mit einem Gehäuse verbunden und deren andere Stirnseite auf einen Kipphebel wirken. Der Kipphebel ist auf einem Auflager gelagert, wobei der Drehpunkt sich auf der Linie befindet, die zwischen den beiden Aktoren verläuft.

Bei Ansteuerung lenkt sich der eine und kürzt sich der andere Aktor, so daß der Kipphebel sich um den Drehpunkt bewegt und der verlängerte Arm des Kipphebels eine übersetzte Auslenkung im Bereich plus minus 100 Mikrometer vollbringt.

Die EP 0 143 128 A beschreibt einen Aktor zum Auslenken eines Stellglieds mit einem kippbaren Übertragungselement, das derart mit dem Stellglied in Wirkverbindung steht, dass das Stellglied durch eine Kippbewegung des Übertragungselements ausgelenkt wird. Der Aktor weist ein aktives Aktorelement auf, das in einem Aktorgehäuse untergebracht ist. Der Aktor ist zwischen dem Aktorgehäuse und dem Übertragungselement angeordnet und mit ihnen kraftschlüssig verbunden. Bei Ansteuerung des Aktorelements wird das Übertragungselement relativ zum Aktorgehäuse gekippt.

Patent Abstracts of Japan, Vol. 012, Nr. 169 (M-699) 20.05.1988 & JP 62 283274 A offenbart einen Aktor zum Auslenken eines Stellglieds mit einem kippbaren Übertragungselement, das derart mit dem Stellglied in Wirkverbindung steht, dass das Stellglied durch eine Kippbewegung des Übertragungselements ausgelenkt wird.

Die Formen der dargestellten Übertragungselemente bieten eine nur mäßige Steifigkeit, die insbesondere bei hochdynamischen Schaltungsvorgängen zu einer Ungenauigkeit der Übertragung der Auslenkung führt.

Die Aufgabe der Erfindung besteht darin, einen Aktor zum Auslenken eines Stellglieds bereitzustellen, der einfach aufgebaut ist und kostengünstig zu fertigen ist.

Die Aufgabe der Erfindung wird durch die Merkmale der unabhängigen Patentansprüche gelöst.

Die Idee der Erfindung besteht darin, einen Aktor mit einem aktiven und einem passiven Aktorelement vorzusehen, die quaderförmig ausgebildet, nebeneinander vorzugsweise zwischen zwei Platten angeordnet und eingespannt sind und deren aneinandergrenzenden Flächen, im folgenden Spaltflächen genannt, einen Zwischenspalt mit einer Spaltbreite bilden.

Das aktive Aktorelement ist als piezoelektrischer Stapel aus übereinander angeordneten Piezoscheiben ausgebildet und weist an seinen gegenüberliegenden Seitenflächen, die seine Spaltfläche angrenzen, je eine Kontaktbahn zur elektrischen Kontaktierung des Piezoscheiben auf, an die zum Ansteuern eine Spannung angelegt werden, wodurch sich das aktive Aktorelement in seiner Längsrichtung dehnt. Der Aktor ist an seinen Stirnenden kraftschlüssig mit den beiden Platten verbunden und ist mit Vorspannmittel auf Druck vorgespannt. Eine der beiden Platten ist mit einem Aktorgehäuse verbunden, in das der Aktor und das Übertragungselement eigebracht ist.

An die andere Platte ist ein Übertragungselement in Form eines Hebelarms angebracht, das auf ein Stellglied wirkt, das z.B. in einer Führungsbohrung des Aktorgehäuses geführt ist.

Die beiden Platten können auch Bestandteile des Übertragungselements bzw. des Aktorgehäuses sein.

Bei Ansteuern des aktiven Aktorelements wird dessen Auslenkung durch die beiden Platten teilweise auf das passive Aktorelement übertragen, wobei das aktive Aktorelement stärker ausgelenkt wird als das passive Aktorelement. Die beiden Platten neigen sich dabei um einen Kippwinkel zueinander. Das Übertragungselement lenkt diese Kippbewegung auf das Stellglied um, wodurch das Stellglied gegenüber dem Aktorgehäuse ausgelenkt wird.

Ein Vorteil der Erfindung liegt in der kompakten Bauweise der Aktors. Aufgrund des geringen Volumens des aktiven Aktorelements und der geringen Kosten des passiven Aktorelements, das vorzugsweise aus einem Keramikblock besteht, ergibt sich ein kostengünstiges System.

Die längsseitig verlaufenden Kontaktbahnen an den gegenüberliegenden Seitenflächen des aktiven Aktorelements schließen direkt an die Spaltfläche an oder liegen in deren Nähe. Weiterhin können die Kontaktbahnen direkt an der Zwischenfläche des aktiven Aktorelements angebracht sein.

Das aktive Aktorelement und somit auch die Kontaktbahnen werden am Zwischenspaltes weniger ausgelenkt als an der dem Zwischenspalt gegenüberliegenden Seitenfläche des aktiven Aktorelements, wodurch die Lebensdauer der Kontaktbahnen und somit des aktiven Aktorelements verlängert werden. Durch die ebenfalls vorzugsweise im Bereich des Zwischenspalts an den beiden Platten seitlich zu den Seitenflächen der Aktorelemente anbrachten Vorspannmittel, die den Aktor auf Druck vorspannen, wird dieser Effekt noch verstärkt. Die Vorspannmittel können z.B. als Zuganker ausgebildet sein, die seitlich an den beiden Platten unter einer Vorspannkraft verschweißt sind.

Vorzugsweise wird der Aktor in einem Kraftstoffeinspritzventil zur Steuerung der Kraftstoffeinspritzung in den Brennraum einer Brennkraftmaschine eingesetzt. Der Aktor betätigt über das Übertragungselement das Stellglied, das das Schließglied eines Servoventils öffnet, wodurch eine Düsennadel von einem ihr zugeordneten Ventilsitz abhebt und der Kraftstoff über Einspritzlöcher in den Brennraum eingespritzt wird.

Die durch Temperaturänderungen hervorgerufene Längenänderung in den Aktorkomponenten können zu einer unerwünschten Auslenkung des Stellglieds führen, die zum Funktionsausfall eines mit dem Stellglied verbundenen Ventils führen kann, beispielsweise durch dessen unerwünschtes Öffnen oder Schließen.

Bei dem oben angegebenen Aktor kann nun jedoch das Verhältnis der thermischen Ausdehnungskoeffizienten des passiven und des aktiven Aktorelements oder der Abstand des passiven zum aktiven Aktorelement nach den Hebelgesetzen derart eingestellt werden, daß das Stellglied unabhängig von der Temperatur in einer vorgegebenen Position verbleibt. Dies ist dann der Fall, wenn das Verhältnis der thermischen Ausdehnungskoeffizienten oder die Lage des passiven Aktorelements so eingestellt ist, daß die Platten bei Temperaturänderung infolge der unterschiedlichen Längenausdehnung des passiven und des aktiven Aktorelements exakt soweit zueinander verkippt werden, daß die Lageveränderung des Verbindungspunktes des ersten Hebelarms mit dem zweiten Hebelarm der Längenänderung des zweiten Hebelarms folgt.

Weitere vorteilhafte Ausbildungen der Erfindung sind in den Unteransprüchen angegeben.

Die Erfindung wird im folgenden anhand der Figuren näher erläutert; es zeigen:

Figur 1a     eine schematische Darstellung einer ersten Übertragungsvorrichtung mit einem Aktor im Längsschnitt,

Figur 1b     eine schematische Darstellung von Teilen der ersten Übertragungsvorrichtung aus Figur 1a mit ausgelenktem Aktor,

Figur 1c     eine schematische Darstellung der ersten Übertragungsvorrichtung im Querschnitt entlang der Linie AA aus Figur 1a

Figur 2a     eine schematische Darstellung einer zweiten Übertragungsvorrichtung im Längsschnitt mit Teilen eines Kraftstoffeinspritzventils,

Figur 2b     die zweite Übertragungsvorrichtung aus Figur 2a im Querschnitt entlang der Linie B-B aus Figur 2a.

Figur 3     eine weitere Übertragungsvorrichtung aus Figur 1a im Querschnitt mit Angabe von Hebel-Längenangaben.

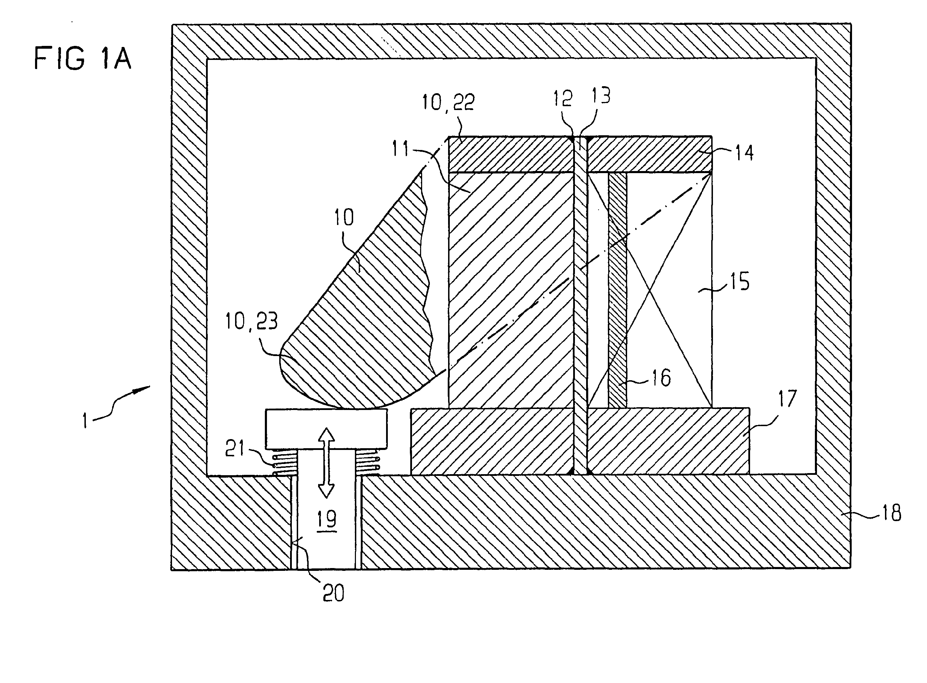

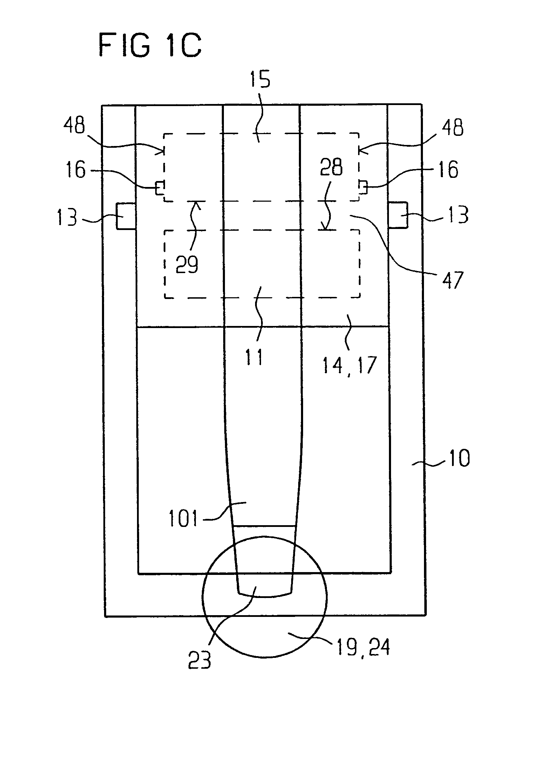

Figuren 1a und 1c zeigen schematisch eine erste Übertragungsvorrichtung mit einem Stellglied 19, auf das über ein Übertragungselement 10 die Auslenkung eines Aktor 15,11 übertragen wird, der ein aktives und ein passives Aktorelement 15,11 aufweist, die vorzugsweise quaderförmig ausgebildet, nebeneinader angeordnet zwischen einer ersten und einer zweiten Platte 17,14 eingespannt sind. Ein schmaler Zwischenspalt 47 (gestrichelte Linien in Figur 1a) liegt zwischen dem aktiven und dem passiven Aktorelement 15,11 parallel zu deren Längsachsen 27,26, dessen Spaltflächen 29,28 einen Spaltabstand aufweisen.

Zwei seitlich an der ersten und der zweiten Platte 17,14 mit Verbindungsmitteln 12 befestigte Vorspannmittel 13 spannen die Aktorelemente 15,11 auf Druck vor, wobei die Vorspannmittel 13 vorzugsweise als Zuganker und die Verbindungsmittel 12 vorzugsweise als Schweißnähte ausgebildet sind sind. Vorzugsweise liegen die Stirnenden der Aktorelemente 15,11 plan an den Flächen der Platten 17,14 an, um eine gute Kraftübertragung, kleine Reaktionszeiten und geringe Scherkräfte in den Aktorelementen 15,11 zu erzielen.

Der Aktor 15,11 ist in ein Aktorgehäuse 18 eingebracht, auf dessen Boden die erste Platte 17 plan befestigt ist und in das ein Führungskanal 20 eingebracht ist, in dem ein Stellglied 19 geführt ist. Das Stellglied 19 wird durch eine Vorspannfeder 21 gegen das Übertragungselement 10 vorgespannt, wobei die Vorspannfeder 21 als Druckfeder ausgebildet ist, die sich auf den Boden des Aktorgehäuses 18 abstützt, den Stiel 25 des Stellglieds 19 umfaßt und die Federkraft auf die Unterseite des Kopfabsatzes des an den Stiel angrenzenden Kopfes 24 überträgt.

In Ruheposition ist das aktive Aktorelement 15 nicht angesteuert, die beiden Platten 17,14 sind dabei vorzugsweise parallel zueinander ausgerichtet und die Aktorelemente 15,11 weisen die gleiche Länge auf, wobei ihre Längsachsen 27,26 senkrecht auf die Flächen der beiden Platten 17,14 weisen.

Die Längsachse des vorzugsweise zylindrisch ausgeführten Stellgliedes 19 ist vorzugsweise seitlich und parallel zu den Längsachsen 27,26 der Aktorelemente 15, 11 angeordnet. Die erste Platte 17 ist parallel zum Boden des Aktorgehäuses 18 und senkrecht zu den Stirnflächen des Aktors 15, 11 ausgerichtet. Das passive Aktorelements 11 liegt zwischen dem Stellglied 19 und dem dem aktiven Aktorelements 15, wobei deren Längsachsen vorzugsweise in einer Ebene liegen, wodurch eine verwindungssteife Übertragung der Auslenkung der Aktors 15,11 auf das Stellglied 19 erzielt wird.

Das Übertragungselement 10 ist mit der zweiten Platte 14 vorzugsweise an dessen Seitenflächen verbunden und besteht aus zwei dünnen, parallel zu den Seitenflächen 48 der Aktorelemente 15,11 angeordneten Scheiben, die ausgehend von der zweiten Platte 14 Übertragungselement schräg zur Stirnfläche des Kopfs 24 des Stellglieds 19 weisen und an ihren Enden 23 in einer Kurve abgerundet sind, um die Kraft gleichmäßig auf den Kopf 24 des Stellglieds 19 zu übertragen. Die Enden 23 sind miteinander über eine dünne Querplatte verbunden, deren Oberfläche der Form der Kurve angepaßt ist, wodurch die auf die Stirnfläche des Kopfs 24 wirkende Fläche vergrößert und somit die Flächenpressung verringert wird und das Übertragungselement 10 die Kraft des Aktors 15,11 verwindungssteif auf das Stellglied 19 überträgt.

Figur 1c zeigt neben dem Übertragungselements 10 aus Figur 1a eine weitere Ausführungsform des Übertragungselements 10 in Form eines abgewinkelten Hebelelements 101, dessen erster Teil auf der zweiten Platte 14 aufgebrachten ist und dessen zweiter Teil im wesentlichen senkrecht auf den Kopf 24 des Stellglieds 19 gerichtet ist.

Das aktive Aktorelement 15 weist an seinen beiden an die Spaltfläche 29 angrenzenden Seitenflächen 48 Kontaktierungsbereiche 16 auf, die vorzugsweise als schmale, parallel zur Längsachse 27 liegenden Kontaktbahnen 16 ausgebildet sind. Vorzugsweise liegen die Kontaktbahnen 16 in der Nähe des Zwischenspalts 47, d.h. auf den dem Zwischenspalt 47 zugewandten Hälften der Seitenflächen 48, vorzugsweise dicht an den die Seitenflächen 48 und die Spaltfläche 29 begrenzenden Ekken, wobei wie weiter unten beschrieben das aktive Aktorelement 15 und damit die Kontaktbahnen 16 bei Ansteuern des aktiven Aktorelements 15 nur eine geringe Längenänderung erfahren und daher eine hohe Lebensdauer aufweisen. Die Lebensdauer der Kontaktbahnen 36 und somit des aktiven Aktorelements 15 hängt nämlich stark von dessen maximalen Längenänderungen ab.

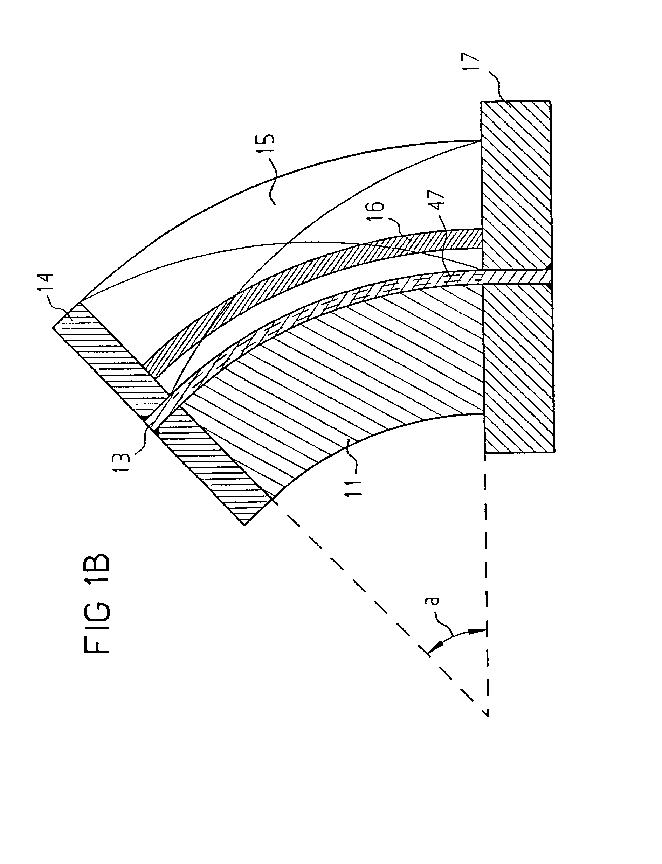

Das aktive Aktorelement 15 wird bei seiner Ansteuerung in Richtung seiner Längsachse 27 ausgedehnt. Da die beiden Platten 17,14 sind kraftschlüssig mit dem aktiven und dem passiven Aktorelement 15, 11 an deren Stirnflächen verbunden sind, wird das passive Aktorelements 11 so verformt, daß der Aktor 15,11 mit den beiden Platten 17,14 eine Kippbewegung ausführt, bei der sich die erste und die zweite Platte 14, 17 um einen Kippwinkel a zueinander neigen. Auf das aktive und das passive Aktorelement 15, 11 wird durch die Kippbewegung eine Scherkraft ausgeübt, wobei sich das aktive Aktorelement 15 stärker als das passive Aktorelement 11 dehnt. Die Kippbewegung ist in Figur 1b übertrieben dargestellt, das aktive Aktorelement 15 dehnt sich gemittelt über seine Stirnflächen um weniger als 50 $\mu$m,

was im folgenden als mittlere Ausdehnung bezeichnet wird.

Durch die bevorzugte Anordnung der Kontaktbahnen 16 nahe des Zwischenspaltes 47 ist eine größere mittlere Auslenkung des aktiven Aktorelements 15 möglich als bei einer herkömmlichen Anordnung der Kontaktbahnen an der Mittellinie der Seitenflächen.

Die erste Platte 17 ist mit dem Boden des Aktorgehäuses 18 fest verbunden, so daß die Kippbewegung über die zweite Platte und über das Übertragungselement 10 in eine Auslenkung des Stellgliedes 19 umgelenkt wird , wobei die Richtung der Auslenkung des Stellglieds 19 im wesentlichen parallel zu den Längsachsen der Aktorelemente 15,11 verläuft. Eine Ausdehnung des aktiven Aktorelements 15 bewirkt eine kurvenförmige Bewegung des Endes 23 des Übertragungselements 10 in Richtung des Bodens des Aktorgehäuses 18, dessen vertikale Komponente in eine Bewegung des Stellglieds 19 in der Führungsbohrung 20 und dessen horizontale Komponente in eine Gleitbewegung des Endes 23 auf der Stirnfläche des Kopfs 24 resultiert. Die Gleitbewegung reduziert die im Aktor 15,11 auftretenden Scherkräfte.

Die Auslenkung ds des Stellglieds 19 ist abhängig von

- dem Abstand der Längsachse des Stellglieds 19 zu den Längsachsen 27,26 der Aktorelemente 15,11,
- dem Abstand der ersten Platte 17 zur zweiten Platte 14,
- den Querschnittsflächen und den Elastizitätsmodulen des aktiven und des passiven Aktorelements 15,11,
- dem Spaltabstand des Zwischenspalts 47,
- der Vorspannkraft und der Elastizität der Vorspannmittel 13
- der Auslenkung des aktiven Aktorelements 15,
- dem Abstand der Längsachsen der Aktorelemente 15,11 zueinander und
- der Geometrie des Übertragungselements. Vorzugsweise ist die Übertragungsvorrichtung 1 so ausgelegt, daß
- sich das aktive Aktorelement 15 um den gleichen Betrag längt wie das passive Aktorelement 11 durch die Kippbewegung zusammengedrückt wird, wodurch das aktive Aktorelement 15 mit ihren Kontaktflächen 16 im Bereich der Spaltfläche 29 im Vergleich zu den der Spaltfläche 29 gegenüberliegenden Aktorelementfläche wesentlich weniger ausgelenkt werden, was zur erhöhten Lebensdauer der Kontaktbahnen 16 beiträgt,
- die mittlere Ausdehnung des aktiven Aktorelements 15 vergrößert auf das Stellglied 19 übertragen wird.

Die Übertragungsvorrichtung 1 weist nur einen einzigen, großen flächigen Kontaktbereich zwischen dem Aktor 15,11 und dem Aktorgehäuse 18 auf, wodurch eine verwindungssteife und schnelle Übertragung der Aktorbewegung und der Aktorkraft relativ zum Aktorgehäuse 18 auf das Stellglied 19 ohne zusätzliche Gegenlager oder Abstützelemente realisiert wird.

Die Aktorelemente 15, 11 weisen vorzugsweise im wesentlichen identische Querschnitte auf, wodurch eine einfache Fertigung und eine kompakte Bauweise erzielt wird.

In anderen Ausführungsbeispielen sind die Aktorelemente 15,11 in Form von Prismen, Zylinder, usw. ausgebildet.

In einem weiteren Ausführungsbeispiel sind die Stirnenden der Aktorelemente angeschrägt, wodurch in Ruheposition des Aktors die beiden Platten unter einem vorgegebenen Winkel angeordnet sind.

In einer weiteren Ausführungsform sind das aktive und das passive Aktorelement 15,11 an ihren Spaltflächen 29,28 kraftschlüssig miteinander verbunden, vorzugsweise durch Verkleben, wodurch eine gleichmäßige Verteilung der Scherkräfte im Aktor erzielt wird und der Aktor 15,11 verwindungssteifer wird.

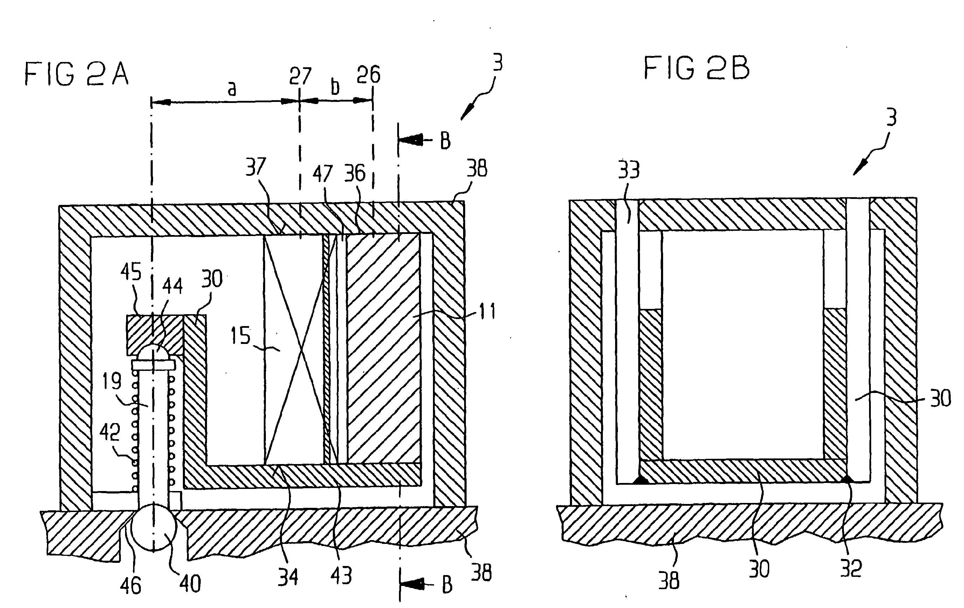

Figur 2a und 2b zeigen eine zweite Übersetzungsvorrichtung 3 als weiteres Ausführungsbeispiel in unterschiedlichen Ansichten. Im Gegensatz zu der ersten Übertragungsvorrichtung 1 aus Figur 1a ist der Aktor 15,11 direkt zwischen einem Übertragungselement 43 und dem Deckel eines Aktorgehäuse 38 eingespannt, wobei Vorspannmittel 33 direkt mit dem Aktorgehäuse 38 und dem Übertragungselement 30 verbunden sind. Das aktive Aktorelement 15 ist zwischen dem Stellglied 19 und dem passiven Aktorelement 11 angeordnet. Der Aktor 15,11 ist mit seiner einen Stirnfläche am Deckel des Aktorgehäuses 38 angeordnet, das Übertragungselement 30 ist an der zum Boden des Aktorgehäuses 38 zugewandten Stirnfläche der Aktorelemente 15,11 befestigt. Das Übertragungselement 30 ist im Querschnitt L-förmig ausgeführt, wobei der erste Schenkel parallel zum Aktorboden und zur Stirnfläche des Aktors 15,11 verläuft und der zweite Schenkel zum Stellglied 19 gerichtet ist und parallel zur dessen Längsachse verläuft. An dem Ende des zweiten Schenkels ist eine Kugelpfanne 45 angeordnet, die auf den kugelförmigen Gelenkkopf 44 des Stellglieds 19 drückt, wobei das Stellglied 19 in der Führungsbohrung des Aktorgehäuses 38 geführt ist und von einer Druckfeder 42 gegen das Übertragungselement 30 vorgespannt ist. Das Stellglied 19 beaufschlagt ein am Ende der Führungsbohrung angeordnetes kugelförmiges Schließglied 40 eines Servoventils eines Kraftstoffeispritzventils, das in Ruheposition auf einem konischem Ventilsitz 46 sitzt und das Servoventil verschließt und bei Auslenken des Stellglieds 19 vom Ventilsitz 46 abhebt und das Servoventil öffnet, wodurch die axiale Bewegung einer Düsennadel und der Kraftstofffluß des Kraftstoffeinspritzventils gesteuert wird (nicht dargestellt). Das Servoventil 40,46 ist als Teil des Kraftstoffeinspritzventils in Figur 2a schematisch dargestellt.

Bei Auslenken des aktiven Elements 15 wird eine im Vergleich zum Ausführungsbeispiel in Figur 1 gegensinnige Kippbewegung ausgelöst, die über das Übertragungselement 30 auf das Stellglied 19 umgelenkt wird.

Figur 2b zeigt die Übertragungsvorrichtung aus Figur 2a in einer gedrehten Ansicht, wobei hier zusätzlich die Vorspannmittel 33 zur Verdeutlichung dargestellt sind.

Das passive Aktorelement 11 besteht vorzugsweise aus einem keramischen Material, das vorzugsweise ähnliche Materialeigenschaften aufweist wie das aktive Aktorelement 15, aber keine elektrischen Kontaktierungen zur Steuerung seiner Längsdehnung aufweist.

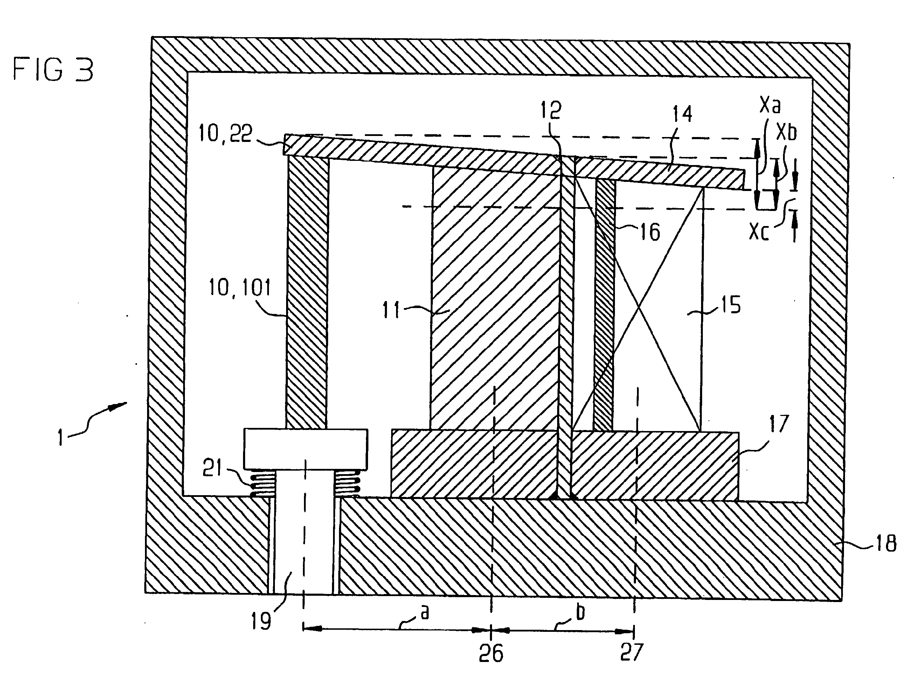

Figur 3 zeigt schematisch die Übertragungsvorrichtung aus Figur 1a, wobei das Übertragungselement 10 aus zwei senkrecht zueinander stehenden Elementen mit rechteckigen Querschnitt bestehen, wobei das eine Element des Übertragungselements 10 die zweite Platte 14 in Richtung über das passive Aktorelement 11 hinaus verlängert und das andere Element 101 des Übertragungselement 10 im wesentlichen axial zum Stellglied 19 angeordnet ist und mit seiner einen Stirnfläche das Stellglied beaufschlagt und mit seiner anderen Stirnfläche mit dem einen Element des Übertragungselements 10 verbunden ist.

Die Übertragungsvorrichtung 1 stellt einen Hebelübersetzer mit einem ersten Hebelarm der ersten Länge a und einem zweiten Hebelarm der zweiten Länge b dar. Die erste Länge a entspricht dem Achsabstand des anderen Elements 101 vom passiven Aktorelements 11 und die zweite Länge b dem Achsabstand des passiven Aktorelements 11 vom aktiven Aktorelement 15.

Beispielhaft sind in Figur 3 Längenausdehnungen Xa, Xb und Xc dargestellt, die den im wesentlichen parallel zur Achse des Stellglieds 19 gerichteten Auslenkungen des anderen Elements 101, des passiven Aktorelements 11 beziehungsweise des aktiven Aktorelements 15 entsprechen.

Gemäß den Hebelgesetzen werden die thermischen Ausdehnungskoeffizienten des Materials der Übertragungsvorrichtung 1 so gewählt werden, daß die Gleichung

$$(Xa-Xb)/(a+b) = (Xb-Xc)/b$$

erfüllt ist, um einen von der Temperatur unabhängigen Arbeitspunkt der axiale Position des Stellglieds 19 zu erhalten.

**Patentansprüche**

1. Aktor zum Auslenken eines Stellglieds mit einem kippbaren Übertragungselement (10, 30), das derart mit dem Stellglied in Wirkverbindung steht, dass das Stellglied durch eine Kippbewegung des Übertragungselements ausgelenkt wird, **dadurch gekennzeichnet, dass**

der Aktor ein passives und genau ein aktives Aktorelement (11,15) aufweist, die

- in einem Aktorgehäuse (18,38) eingebracht sind,
- derart nebeneinander angeordnet sind, dass dazwischen ein Zwischenspalt (47) gebildet wird,
- derart zwischen dem Aktorgehäuse (18) und dem Übertragungselement (10,30) angeordnet, mit ihnen kraftschlüssig verbunden und zwischen ihnen durch Vorspannmittel (13) eingespannt sind, dass bei Ansteuerung des aktiven Aktorelements (15) das Übertragungselement (10, 30) relativ zum Aktorgehäuse (18) gekippt wird.

2. Aktor nach Anspruch 1, **dadurch gekennzeichnet, dass**

- zwischen dem Aktorgehäuse (18,38) und dem Aktor (15,11) und dem Übertragungselement (10,30) und dem Aktor (15,11) Platten angeordnet sind, an denen die Vorspannmittel (13) zum Vorspannen des Aktors (15,11) angebracht sind,
- die Vorspannmittel (13) im Bereich des Zwischenspalts (47) zwischen dem aktiven und dem passiven Aktorelement (15,35) angeordnet sind.

3. Aktor nach einem der vorhergehenden Ansprüche, **dadurch gekennzeichnet, dass** zumindest ein Teil des passiven Aktorelements (11,31) beim Auslenken des aktiven Aktorelements (15,35) entgegengesetzt zu dessen Auslenkrichtung ausgelenkt wird.

4. Aktor nach einem der vorhergehenden Ansprüche, **dadurch gekennzeichnet, dass** das aktive Aktorelement (15) aus einem piezoelektrischen Stapel besteht, an dessen Seitenflächen (48) Kontaktierungsbereiche (16) angeordnet sind, die nahe des Zwischenspaltes (47) zwischen dem aktiven und dem passiven Aktorelement (15,11) angeordnet sind.

5. Aktor nach einem der vorhergehenden Ansprüche, **dadurch gekennzeichnet, dass** die aneinandergrenzenden Flächen des aktiven und des passiven Aktorelements (15,35,11,31) kraftschlüssig miteinander verbunden sind.

6. Aktor nach Anspruch 5, **dadurch gekennzeichnet, dass** die aneinandergrenzenden Flächen des aktiven und des passiven Aktorelements (15,35,11,31) durch Verkleben miteinander verbunden sind.

7. Aktor nach einem der vorhergehenden Ansprüche, **dadurch gekennzeichnet, dass**

- das die Auslenkung (ds) des Stellglieds (19) abhängig ist von der Querschnittsfläche und dem Materials des aktiven und des passiven Aktorelements,
- dem Abstand der Längsachse des Stellglieds (19) zu den Längsachsen (27,26) der Aktorelemente (15,11),
- dem Abstand der ersten Platte (17) zur zweiten Platte (14),
- den Querschnittsflächen und den Elastizitätsmodulen des aktiven und des passiven Aktorelements (15,11)
- dem Spaltabstand des Zwischenspalts (47),
- der Vorspannkraft und dem Elastizitätsmodul der Vorspannmittel (13),
- der Auslenkung des aktiven Aktorelements (15),
- dem Abstand der Längsachsen (27,26)der Aktorelemente (15,11) zueinander, und
- der Geometrie des Übertragungselements.

8. Aktor nach einem der vorhergehenden Ansprüche, **dadurch gekennzeichnet, dass** das Stellglied (19) axial im Aktorgehäuse (18) geführt ist.

9. Aktor nach einem der vorhergehenden Ansprüche, **dadurch gekennzeichnet, dass** die Bewegung des Stellglieds (19) im wesentlichen parallel zur Längsachse (27) des aktiven Aktorelements (15) verläuft.

10. Aktor nach einem der vorhergehenden Ansprüche, **dadurch gekennzeichnet, dass** das aktive und das passive Aktorelement (15,11) im Ruhezustand des Aktors (15,11) im wesentlichen die gleiche Länge aufweisen.

11. Aktor nach einem der vorhergehenden Ansprüche, **dadurch gekennzeichnet, dass** die Längsachse (27) des aktiven Aktorelements (15) in einer Ebene mit den Längsachsen des passiven Aktorelements (11) und des Stellglieds (19) liegt.

12. Aktor nach einem der vorhergehenden Ansprüche, **dadurch gekennzeichnet, dass** das passive Aktorelement (11) aus einem keramischen Material besteht.

13. Aktor nach einem der vorhergehenden Ansprüche, **dadurch gekennzeichnet, dass** das Verhältnis der thermischen Ausdehnungskoeffizienten der Materialien der Übertragungsvorrichtung, insbesondere des passiven und des aktiven Aktorelements (11,15) und der Abstand des passiven vom aktiven Aktorelement (11,15) derart eingestellt ist, dass die Position des Stellglieds (19) unabhängig von der Temperatur ist.

14. Kraftstoffeinspritzventil mit einem Aktor nach Anspruch 1.

**Claims**

1. Actuator for displacement of a final controlling element having a tiltable transmission element (10, 30) which is mechanically linked to the final controlling element such that the final controlling element is displaced by a tilting motion of the transmission element, **characterised in that** the actuator has a passive and precisely one active actuator element (11, 15) which

    - are introduced into an actuator housing (18, 38),
    - are arranged next to one another such that an intermediate gap (47) is formed between them,
    - are arranged between the actuator housing (18) and the transmission element (10, 30), are connected to them in friction-locked fashion and are clamped between them by pretensioning means (13) such that the transmission element (10, 30) is tilted relative to the actuator housing (18) when the active actuator element (15) is triggered.

2. Actuator according to claim 1, **characterised in that**

    - plates are arranged between the actuator housing (18, 38) and the actuator (15, 11) and the transmission element (10, 30) and the actuator (15, 11), to which the pretensioning means (13) for pretensioning the actuator (15, 11) are attached,
    - the pretensioning means (13) are arranged in the region of the intermediate gap (47) between the active and the passive actuator element (15, 35).

3. Actuator according to one of the preceding claims, **characterised in that** on displacement of the active actuator element (15, 35), at least one part of the passive actuator element (11, 31) is displaced conversely to the direction of displacement of said active actuator element (15, 35).

4. Actuator according to one of the preceding claims, **characterised in that** the active actuator element (15) consists of a piezoelectric stack, on the side surfaces (48) of which contact areas (16) are arranged, which are arranged near to the intermediate gap (47) between the active and the passive actuator element (15, 11).

5. Actuator according to one of the preceding claims, **characterised in that** the abutting surfaces of the active and the passive actuator element (15, 35, 11, 31) are connected to one another in friction-locked fashion.

6. Actuator according to claim 5, **characterised in that** the abutting surfaces of the active and the passive actuator element (15, 35, 11, 31) are connected to one another by bonding.

7. Actuator according to one of the preceding claims, **characterised in that**

    - the displacement (ds) of the final controlling element (19) depends on the cross-sectional surface and the material of the active and the passive actuator element,
    - on the distance between the longitudinal axis of the final controlling element (19) and the longitudinal axes (27, 26) of the actuator elements (15, 11),
    - on the distance between the first plate (17) and the second plate (14),
    - on the cross-sectional surfaces and the elasticity modules of the active and the passive actuator element (15, 11),
    - on the gap spacing of the intermediate gap (47),
    - on the pretensioning force and the elasticity module of the pretensioning means (13),
    - on the displacement of the active actuator element (15),
    - on the distance of the longitudinal axes (27, 26) of the actuator elements (15, 11) from one another, and
    - on the geometry of the transmission element.

8. Actuator according to one of the preceding claims, **characterised in that** the final controlling element (19) is guided axially in the actuator housing (18).

9. Actuator according to one of the preceding claims, **characterised in that** the motion of the final controlling element (19) is essentially parallel to the longitudinal axis (27) of the active actuator element (15).

10. Actuator according to one of the preceding claims, **characterised in that** the active and the passive actuator element (15, 11) essentially have the same length in the idle state of the actuator (15, 11).

11. Actuator according to one of the preceding claims,

**characterised in that**
the longitudinal axis (27) of the active actuator element (15) lies in a plane with the longitudinal axes of the passive actuator element (11) and of the final controlling element (19) .

12. Actuator according to one of the preceding claims, **characterised in that**
the passive actuator element (11) consists of a ceramic material.

13. Actuator according to one of the preceding claims, **characterised in that**
the ratio of the thermal expansion coefficients of the materials of the transmission apparatus, especially of the passive and active actuator element (11, 25) and of the distance between the passive and the active actuator element (11, 15), is set such that the position of the final controlling element (19) is independent of the temperature.

14. Fuel injection valve having an actuator according to claim 1.

## Revendications

1. Actionneur pour dévier un organe de commande comprenant un élément de transmission pouvant être basculé (10, 30) et qui est en liaison efficace avec l'organe de commande de telle sorte que l'organe de commande est dévié par un mouvement de basculement de l'élément de transmission, **caractérisé en ce que**
l'actionneur présente un élément d'actionneur passif et exactement un élément d'actionneur actif (11, 15), qui

   - sont logés dans un boîtier d'actionneur (18, 38),
   - sont agencés l'un à côté de l'autre de telle sorte qu'une fente intermédiaire (47) est formée entre eux,
   - sont agencés entre le boîtier d'actionneur (18) et l'élément de transmission (10, 30), sont reliés à ceux-ci par coopération de forces et sont encastrés entre eux par des moyens de pré-contrainte (13), de telle sorte que, lors d'une excitation de l'élément d'actionneur actif (15), l'élément de transmission (10, 30) est basculé par rapport au boîtier d'actionneur (18).

2. Actionneur selon la revendication 1, **caractérisé en ce que** :

   - des plaquettes sur lesquelles sont montés les moyens de pré-contrainte (13) afin de pré-contraindre l'actionneur (15, 11) sont agencées entre le boîtier d'actionneur (18, 38) et l'actionneur (15, 11) et l'élément de transmission (10, 30) et l'actionneur (15, 11),
   - les moyens de pré-contrainte (13) sont agencés dans la zone de la fente intermédiaire (47) entre l'élément d'actionneur actif et l'élément d'actionneur passif (15, 35).

3. Actionneur selon l'une des revendications précédentes, **caractérisé en ce que**
lors de la déviation de l'élément d'actionneur actif (15, 35), au moins une partie de l'élément d'actionneur passif (11, 31) est déviée dans le sens opposé à sa direction de déviation.

4. Actionneur selon l'une des revendications précédentes, **caractérisé en ce que**
l'élément d'actionneur actif (15) est constitué d'un empilement piézoélectrique, dans lequel sont agencées, sur les surfaces latérales (48) de celui-ci, des zones de mise à contact (16) qui sont agencées à proximité de la fente intermédiaire (47) entre l'élément d'actionneur actif et l'élément d'actionneur passif (15, 11).

5. Actionneur selon l'une des revendications précédentes, **caractérisé en ce que**
les surfaces adjacentes de l'élément d'actionneur actif et de l'élément d'actionneur passif (15, 35, 11, 31) sont reliées entre elles par coopération de forces.

6. Actionneur selon la revendication 5, **caractérisé en ce que** les surfaces adjacentes de l'élément d'actionneur actif et de l'élément d'actionneur passif (15, 35, 11, 31) sont reliées entre elles par collage.

7. Actionneur selon l'une des revendications précédentes, **caractérisé en ce que** :

   - la déviation (ds) de l'organe de commande (19) dépend de la surface de section transversale et du matériau de l'élément d'actionneur actif et de l'élément d'actionneur passif,
   - de la distance de l'axe longitudinal de l'organe de commande (19) par rapport aux axes longitudinaux (27, 26) des éléments d'actionneur (15, 11),
   - de la distance de la première plaquette (17) par rapport à la seconde plaquette (14),
   - des surfaces de section transversale et des modules d'élasticité de l'élément d'actionneur actif et de l'élément d'actionneur passif (15, 11),
   - de la distance de fente de la fente intermédiaire (47),

- de la force de pré-contrainte et du module d'élasticité des moyens de pré-contrainte (13),
- de la déviation de l'élément d'actionneur actif (15),
- de la distance des axes longitudinaux (27, 26) des éléments d'actionneur (15, 11) entre eux, et
- de la géométrie de l'élément de transmission.

8.  Actionneur selon l'une des revendications précédentes,
    **caractérisé en ce que**
    l'organe de commande (19) est guidé axialement dans le boîtier d'actionneur (18).

9.  Actionneur selon l'une des revendications précédentes,
    **caractérisé en ce que**
    le mouvement de l'organe de commande (19) s'étend sensiblement en parallèle à l'axe longitudinal (27) de l'élément d'actionneur actif (15).

10. Actionneur selon l'une des revendications précédentes,
    **caractérisé en ce que**
    l'élément d'actionneur actif et l'élément d'actionneur passif (15, 11) présentent sensiblement la même longueur dans l'état de repos de l'actionneur (15, 11).

11. Actionneur selon l'une des revendications précédentes,
    **caractérisé en ce que**
    l'axe longitudinal (27) de l'élément d'actionneur actif (15) est disposé dans un plan avec les axes longitudinaux de l'élément d'actionneur passif (11) et de l'organe de commande (19) .

12. Actionneur selon l'une des revendications précédentes,
    **caractérisé en ce que**
    l'élément d'actionneur passif (11) est constitué d'un matériau céramique.

13. Actionneur selon l'une des revendications précédentes,
    **caractérisé en ce que**
    le rapport des coefficients de dilation thermique des matériaux du dispositif de transmission, en particulier de l'élément d'actionneur passif et de l'élément d'actionneur actif (11, 15) et la distance entre l'élément d'actionneur passif et l'élément d'actionneur actif (11, 15) est ajusté de telle sorte que la position de l'organe de commande (19) est indépendante de la température.

14. Soupape d'injection de carburant comprenant un actionneur selon la revendication 1.

FIG 1A

FIG 1B

FIG 1C

FIG 2B

FIG 2A

FIG 3

EP 1 142 040 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4101076 A
- EP 0143128 A

- JP 62283274 B
- JP 62283274 A

**In der Beschreibung aufgeführte Nicht-Patentliteratur**

- Piezoaktor torische Antriebe für den industriellen Einsatz. *Feinwerktechnik und Meßtechnik,* 1996, vol. 104, 68-72

- *PATENT ABSTRACTS OF JAPAN,* 20. Mai 1988, vol. 012, 169